# EUROPÄISCHE PATENTSCHRIFT

(11) **EP 1 785 884 B1**
(45) Veröffentlichungstag und Bekanntmachung des Hinweises auf die Patenterteilung: **02.04.2008**
(21) Anmeldenummer: 06022171.0
(22) Anmeldetag: 23.10.2006
(51) Int. Cl.: G06F 13/40

(54) **Bussystem für integrierten Schaltkreis**
Bus system for integrated circuit
Système de bus pour circuit intégré

(30) Priorität: 27.10.2005 DE 102005051411
(43) Veröffentlichungstag der Anmeldung: 16.05.2007
(73) Patentinhaber: ATMEL Germany GmbH, 74072 Heilbronn (DE)
(72) Erfinder: Fischer, Harald, 56338 Braubach/Rhein (DE)
(74) Vertreter: Müller, Wolf-Christian

(56) Entgegenhaltungen:
- US-B1- 6 331 822

## Beschreibung

Die vorliegende Erfindung betrifft ein IC-internes Bussystem zum signaltechnischen Verbinden einer Mehrzahl mit dem integrierten Schaltkreis (IC) in Wirkverbindung stehender Funktionseinheiten, die zum Erzeugen und/oder Verarbeiten von digitalen und/oder analogen Signalen ausgebildet sind, wobei das Bussystem einen digitalen Bus aufweist.

Weiterhin betrifft die vorliegende Erfindung einen integrierten Schaltkreis zum Anschließen einer Anzahl von Funktionseinheiten sowie eine Schaltungsanordnung.

Bei vorbekannten IC-internen Bussystemen zum Verbinden einer Mehrzahl mit dem IC in Wirkverbindung stehender Funktionseinheiten, wie zum Beispiel Sensoren zum Liefern (analoger) Messwertsignale, Feldbus-Treibern oder dergleichen, sind regelmäßig rein digitale Busse in Verbindung mit entsprechenden Analog/Digital-Wandlern und Digital/Analog-Wandlern vorgesehen. Diese wandeln insbesondere von den Funktionseinheiten stammende Analogsignale in Digitalsignale um, die anschließend über das IC-interne Bussystem zu anderen Funktionseinheiten bzw. zu Datenverarbeitungseinheiten innerhalb des IC übertragen werden. Dabei erfolgt vor einer Weiterleitung der umgewandelten Analogsignale zu den Funktionseinheiten gegebenenfalls eine Rückumwandlung in Analogsignale.

Aus der US 6,331,822 B1 ist eine Kommunikationssteuervorrichtung bekannt, die an einen analogen Signalbus und an einen digitalen Signalbus angeschlossen ist. Der digitale Signalbus ist über einen Kommunikations-IC mit einer zentralen Prozessoreinheit der Vorrichtung verbunden. Der analoge Signalbus sowie weiterhin eine Anzahl von Sensoren, die analoge Signale erzeugen, sind über entsprechende Analog/Digital-Wandler der Vorrichtung ebenfalls mit der zentralen Prozessoreinheit verbunden. Dabei ist anzunehmen, dass zumindest der genannte Kommunikations-IC einen internen digitalen Bus aufweist, der zum signaltechnischen Verbinden einer Mehrzahl von Funktionseinheiten in Form von Eingabe/Ausgabe-Einheiten dient, wobei letztere mit dem Kommunikations-IC in Wirkverbindung stehen.

Bei derartigen vorbekannten Bussystemen bzw. Schaltungsanordnungen aus IC und Funktionseinheiten ist insbesondere als nachteilig anzusehen, dass das vielwertige Vorsehen von Analog/Digital- bzw. Digital/Analog-Wandlern einen hohen Flächenverbrauch für einen entsprechend ausgestatteten integrierten Schaltkreis zur Folge hat. Dies ist weiterhin mit entsprechenden Kostennachteilen bei der Herstellung verbunden. Zudem führt das Vorhandensein der vorstehend genannten Wandlereinrichtungen zu einem in nachteiliger Weise erhöhten Stromverbrauch des IC.

Der Erfindung liegt die Aufgabe zu Grunde, ein IC-internes Bussystem der Eingangs genannten Art, einem integrierten Schaltkreis zum Anschließen einer Anzahl von Funktionseinheiten sowie eine Schaltungsanordnung aus einem solchen integrierten Schaltkreis und einer Anzahl angeschlossener Funktionseinheiten anzugeben, bei denen die vorstehend genannten Nachteile vermieden sind. Zudem sollen die zu schaffenden Vorrichtungen modular ausgestaltet und somit beliebig einsetzbar sein.

Die Aufgabe wird bei einem Bussystem der eingangs genannten Art dadurch gelöst, dass dieses zusätzlich einen IC-internen analogen Bus aufweist.

Bei einem integrierten Schaltkreis der eingangs genannten Art wird die Aufgabe dadurch gelöst, dass dieser ein erfindungsgemäßes Bussystem beinhaltet.

Schließlich wird die Aufgabe bei einer Schaltungsanordnung dadurch gelöst, dass diese einen erfindungsgemäßen integrierten Schaltkreis sowie eine Anzahl an den integrierten Schaltkreis angeschlossener Funktionseinheiten besitzt, wobei letztere zum Erzeugen und/oder Verarbeiten von digitalen und/oder analogen Signalen ausgebildet sind.

Durch die Aufnahme eines analogen Busses in einen integrierten Schaltkreis zusätzlich zu einem digitalen Bus ergibt sich im Hinblick auf den Einsatz unterschiedlichster Funktionseinheiten eine vollständige Modularität des integrierten Schaltkreises, so dass dieser quasi beliebig einsetzbar ist. Im Zuge des erfindungsgemäßen Modularitätskonzepts weist ein erfindungsgemäßer integrierter Schaltkreis dabei vorzugsweise einen standardisierten, internen Busablauf mit Timing, Interrupt-Controlling und Wake-Up Conditions einschließlich eines gesteuerten Power-Managements auf.

Aufgrund des Vorhandenseins eines zusätzlichen analogen Busses entfallen die nach dem Stand der Technik regelmäßig vorhandenen Analog/Digital- bzw. Digital/Analog-Wandler, was zu einer entsprechenden Flächen- und Stromersparnis führt.

Bei einer Weiterbildung des erfindungsgemäßen Bussystems ist vorgesehen, dass dieses eine zentrale Master-Steuereinheit für den digitalen Bus und für den analogen Bus aufweist, die zum zeitlich gesteuerten Weiterleiten von digitalen Signalen bzw. analogen Signalen an die entsprechenden Funktionseinheiten ausgebildet ist. Auf diese Weise lässt sich durch eine entsprechende Ausgestaltung bzw. Anpassung allein der zentralen Master-Steuereinheit eine anwendungsspezifische Ausgestaltung des gesamten Bussystems bzw. eines darauf aufbauenden integrierten Schaltkreises erreichen, so dass die angestrebte vollständige Modularität der Anordnung gewährleistet ist.

Im Zuge einer weiteren Ausgestaltung des erfindungsgemäßen Bussystems ist vorgesehen, dass dieses eine Mehrzahl von Schnittstellen-Funktionsmodulen aufweist, die zum Anschließen jeweils wenigstens einer Funktionseinheit an das Bussystem ausgebildet sind. Im Zuge der der Erfindung zu Grunde liegenden Standardisierungsbestrebungen setzen die vorstehend genannten Schnittstellen-Funktionsmodule vorzugsweise auf einen weit verbreiteten Standard auf. Im Zuge einer äußerst bevorzugten Weiterbildung des erfindungsgemäßen Bussystems ist deshalb vorgesehen, dass die Schnittstellen-Funktionsmodule als IP-Module (IP - IndustryPack®) ausgebildet sind. Bei so genannten IP-Modulen handelt es sich um standardisierte, vielfältig einsetzbare Module, mit dem sich eine Vielzahl von Eingabe/Ausgabe-, Steuerungs-, Schnittstellen-, Analog- und Digitalfunktionen implementieren lassen, was dem Fachmann bekannt ist (vgl. "IP Modules Draft Standard", VITA 4-1995, Draft 1.0.b.0, vom 07. April 1995).

Um erfindungsgemäß vollständig ohne Analog/Digital- und Digital/Analog-Wandler auszukommen, ist nach einer Weiterbildung des erfindungsgemäßen Bussystems vorgesehen, dass die Schnittstellen-Funktionsmodule zum Weiterleiten von den jeweiligen Funktionseinheiten empfangener digitaler Signale auf den digitalen Bus und zum Weiterleiten von den jeweiligen Funktionseinheiten empfangener analoger Signale auf den analogen Bus ausgebildet sind.

Nach einer weiteren Ausgestaltung des erfindungsgemäßen Bussystems steht die Master-Steuereinheit mit wenigstens einer Speichereinheit und/oder Datenverarbeitungseinheit in Verbindung. Auf diese Weise ist es insbesondere möglich, mittels der Datenverarbeitungseinheit den oben erwähnten standardisierten internen Busablauf einschließlich Timing etc. zu realisieren. Des weiteren ist es aufgrund der vorstehend genannten Verbindung prinzipiell möglich, die Master-Steuereinheit als Programmcode-Mechanismus im Zuge der Ausführung eines entsprechenden Programmcodes durch die Datenverarbeitungseinheit zu realisieren, wobei der entsprechende Programmcode in der Speichereinheit enthalten sein kann.

In Weiterbildung des erfindungsgemäßen Bussystems kann vorgesehen sein, dass die Master-Steuereinheit als Zustandsmaschine (State Machine) ausgebildet ist. Eine derartige Zustandsmaschine zeichnet sich durch fest vorgegebene Zuordnungen zwischen Ein- und Ausgangssignalen aus, die über das erfindungsgemäße Bussystem zwischen der Master-Steuereinheit und den Schnittstellen-Funktionsmodulen (und umgekehrt) übertragen werden, wobei bestimmte Zustände bzw. Zustandsänderungen entsprechende vorbestimmte Aktionen (Signalweiterleitungen) bewirken. Dabei kann die Master-Steuereinheit im Rahmen einer weiteren Ausgestaltung des erfindungsgemäßen Bussystems softwaretechnisch für die Signalübertragung auf dem digitalen Bus und dem analogen Bus eingerichtet sein. Insbesondere kann somit auch die Zustandsmaschine softwaretechnisch ausgebildet sein, beispielsweise in Form einer ereignisgesteuerten Zustandsmaschine oder als virtuelle Zustandsmaschine, beispielsweise unter Verwendung der oben genannten Datenverarbeitungseinheit. Alternativ kann insbesondere die Zustandsmaschine auch als digitale Schaltung mit Hilfe von PLCs, logischen Gattern, Flip-Flops oder Relais realisiert werden.

Bei einer äußerst bevorzugten Ausgestaltung des erfindungsgemäßen Bussystems ist vorgesehen, dass die Master-Steuereinheit, d.h. insbesondere die Zustandsmaschine für die Signalübertragung auf dem digitalen Bus und dem analogen Bus nach Maßgabe vorgegebener Zuordnungen, insbesondere in Form von ROM-Tabellen, eingerichtet ist. Dies entspricht einer anwendungsspezifischen quasi-festen Verdrahtung von Ein- und Ausgängen im Bussystem des erfindungsgemäßen ICs zu Zwecken einer bestimmten Art der Signalweiterleitung, wobei insbesondere aufgrund der prinzipiellen Veränderbarkeit der ROM-Tabellen die angestrebte Modularität bzw. vielseitige Verwendbarkeit des integrierten Schaltkreises gewährleistet ist.

Um Anwendern bzw. Herstellern eines derartig anwendungsspezifisch eingerichteten integrierten Schaltkreises die Möglichkeit zu geben, diesen bzw. seine Einzelkomponenten und auch die Software umfassend zu testen, sieht eine äußerst bevorzugte Weiterbildung des erfindungsgemäßen Bussystems vor, dass dieses eine weitere Schnittstelle für den Anschluss einer zum Testen wenigstens einer der Funktionseinheiten, Schnittstellen-Funktionsmodule oder Signalübertragungs-Konfiguration der Master-Steuereinheit ausgebildeten Testvorrichtung aufweist. Dabei ist im Rahmen der vorliegenden Erfindung unter einer "Signalübertragungs-Konfiguration" die weiter oben eingehend erläuterte anwendungsspezifische Zuordnung von Ein- und Ausgängen zum Zwecke der Signalübertragung zu verstehen.

Weitere Eigenschaften und Vorteile der vorliegenden Erfindung ergeben sich aus der nachfolgenden Beschreibung eines Ausführungsbeispiels anhand der Zeichnung. Es zeigt:
- Fig. 1: ein detailliertes strukturelles Blockschaltbild einer erfindungsgemäßen Schaltungsanordnung mit IC-internem Bussystem und einer Mehrzahl von Funktionseinheiten; und
- Fig. 2: ein funktionelles Blockschaltbild des erfindungsinternen Bussystems.

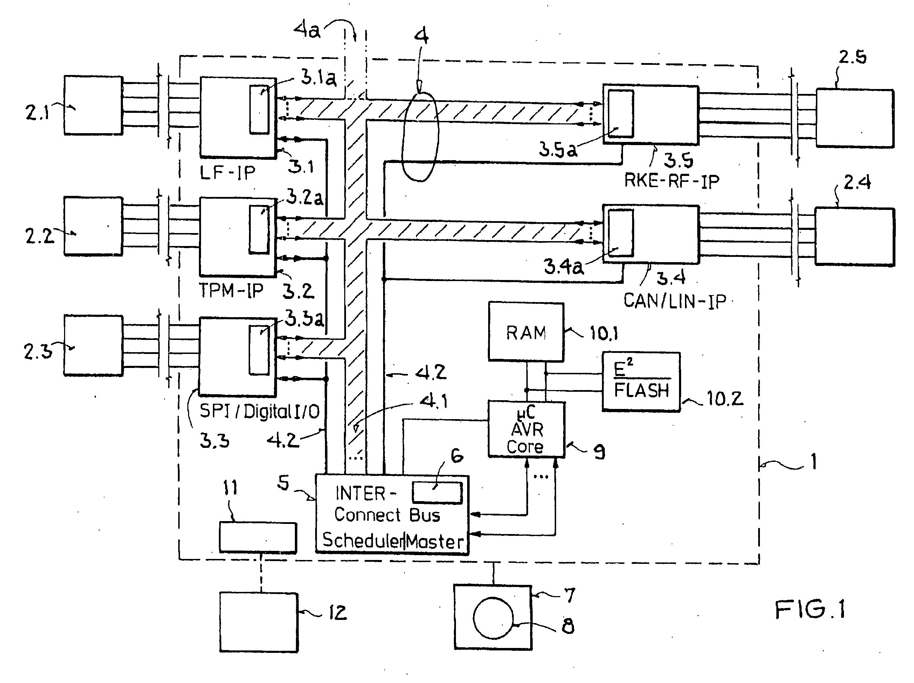

Die Fig. 1 zeigt anhand eines gestrichelt gezeichneten Kastens einen integrierten Schaltkreis (IC) 1, mit dem eine Mehrzahl von Funktionseinheiten 2.1 - 2.5 in Wirkverbindung stehen. Bei den Funktionseinheiten 2.1 - 2.5 kann es sich beispielsweise um Funktionseinheiten zur Reifendruckmessung (TPM - Tyre Pressure Measurement), zur Zugangskontrolle für ein Kraftfahrzeug (RKE - Remote Keyless Entry), zur Ansteuerung eines Feldbusses (beispielsweise eines CAN-Busses) oder dergleichen handeln. Im Zuge einer äußerst bevorzugten Ausgestaltung der vorliegenden Erfindung eignet sich der IC 1 somit insbesondere für eine Verwendung in RKE/TPM/PEG-Systemen (PEG - Passive Entry Go).

Gemäß der Fig. 1 weist der IC 1 eine Anzahl von Schnittstellen-Funktionsmodulen 3.1 - 3.5 auf, die untereinander über ein Bussystem 4 verbunden sind. Jedes der Schnittstellen-Funktionsmodule 3.1 - 3.5 stehen weiterhin in Wirkverbindung mit einer zugeordneten Funktionseinheit 2.1-2.5, z.B. einem Sensor. Wie in einem Bereich 4a des Bussystems 4 dargestellt ist, lässt sich das Bussystem 4 prinzipiell um weitere Schnittstellen-Funktionsmodule bzw. entsprechend zugeordnete Funktionseinheiten erweitern (ansatzweise gestrichelt dargestellt).

Das Bussystem 4 weist gemäß einem Grundgedanken der vorliegenden Erfindung einen digitalen Bus 4.1 sowie einen analogen Bus 4.2 auf. Die Schnittstellen-Funktionsmodule 3.1 - 3.5 sind vorzugsweise als IP-Module (IP - IndustryPack®) ausgebildet, wobei die entsprechenden Spezifikationen dem Fachmann geläufig sind. Jedes der Schnittstellen-Funktionsmodule 3.1 bis 3.5 weist eine Steuerungseinheit 3.1a - 3.5a auf, die als vollständig eigenständiger Schaltungsteil innerhalb des IC 1 ausgebildet ist. Die Steuerungseinheiten 3.1a - 3.5a fungieren als Analog-/Digital-Bus-Scheduler zum weiterleiten von Digitalsignalen DS bzw. Analogsignalen AS von den jeweiligen Funktionseinheiten 2.1 - 2.5 an das Bussystem 4 sowie zum Weiterleiten entsprechender Signale von Bussystem 4 an die jeweilige Funktionseinheit 2.1 - 2.5, was in der Fig. 1 anhand von Doppelpfeilen AS, DS dargestellt ist.

In dem Bussystem 4 weist der dargestellte IC 1 weiterhin eine zentrale Master-Steuerungseinheit 5 auf, so dass diese sowohl mit dem digitalen Bus 4.1 als auch mit dem analogen Bus 4.2 in signaltechnischer Wirkverbindung steht. Bei dem gezeigten Ausführungsbeispiel beinhaltet die Master-Steuereinheit 5 Zuordnungsvorschriften für die Signalübertragung auf dem digitalen Bus 4.1 und auf dem analogen Bus 4.2 in Form einer ROM-Tabelle 6. Insbesondere zum Implementieren der ROM-Tabelle 6 steht der IC 1 - wie gezeigt - mit einer geeigneten Eingabevorrichtung 7 in Wirkverbindung, die zum Einlesen eines insbesondere ein Abbild der ROM-Tabelle 6 enthaltenen Datenträgermediums 8 ausgebildet ist, was dem Fachmann geläufig ist. Die Master-Steuereinheit 5 ist weiterhin mit einer Datenverarbeitungseinheit 9, beispielsweise einem Mikroprozessor, sowie über diese mit Speichereinheiten in Form eines RAM-Speichers 10.1 sowie eines EEPROM/FLASH-Speicher 10.2 verbunden. Alternativ zu der vorstehend beschriebenen Lösungsvariante kann die ROM-Tabelle 6 demnach auch in dem speziell als EEPROM/FLASH-Speicher ausgebildeten Nur-Lese-Speicher (ROM) 10.2 enthalten sein.

Schließlich weist der IC 1 gemäß der Fig. 1 noch eine Schnittstelle 11 zum Anschließen einer Testvorrichtung 12 auf, wobei die Schnittstelle 11 dergestalt ausgebildet sein kann, dass das Anschließen der Testvorrichtung 12 entweder über ein so genanntes Air-Interface oder über die Anschlusspins (nicht gezeigt) des IC 1 erfolgt, was in der Fig. 1 durch eine gestrichelte Linie symbolisiert ist.

Die vorstehend beschriebene Schaltungsanordnung stellt in neuartiger Weise ein einziges Bussystem 4 für Analog- und Digitalsignale AS bzw. DS mit gleichbleibendem Interface zwischen allen Schnittstellen-Funktionsmodulen 3.1 - 3.5 mit hoher Redundanz und Erweiterungsfähigkeit zur Verfügung, so dass der IC 1 vollständig modular ist. Durch das Vorsehen einer zentralen Steuereinheit 5 für den Digitalbus 4.1 und den Analogbus 4.2 lässt sich ein standardisierter interner Busablauf einschließlich Timing, Interrupt-Controlling und Wake-Up Conditions einschließlich eines gesteuerten Power-Managements realisieren. Dabei übernimmt die zentrale Master-Steuereinheit 5 eine Weiterleitungsfunktion für die auf dem Bussystem 4 ankommenden bzw. anstehenden Digital- und Analogsignale DS bzw. AS: Demgemäß werden die Digitalsignale DS in an sich bekannter Weise nach Maßgabe ihrer Adressierung durch die Master-Steuereinheit 5 zu ihrer Zieladresse, d.h. einer bestimmten Funktionseinheit 2.1 - 2.5 bzw. den zugeordneten Schnittstellen-Funktionsmodulen 3.1, 3.5 durchgeleitet. Entsprechend bestimmt die Master-Steuereinheit 5, ob bzw. welches Analogsignal AS auf dem analogen Bus 4.2 ansteht und gibt es entsprechend (zeitlich gesteuert) zur Verwendung durch eine der Funktionseinheiten 2.1 - 2.5 bzw. des zugeordneten Schnittstellen-Funktionsmoduls 3.1 - 3.5 über den analogen Bus 4.2 wieder aus. In diesem Sinne fungiert die Master-Steuereinheit 5 als Analog/Analog-Umsetzer (Treiber).

Allgemein geschieht die Ablaufsteuerung für die Signalübertragung auf dem Bussystem 4 durch die Master-Steuereinheit 5 nach Maßgabe vorgegebener Zuordnungsvorschriften, die bei dem gezeigten Ausführungsbeispiel in Form einer ROM-Tabelle 6 in der Master-Steuereinheit 5 abgelegt sind. Nach Maßgabe dieser Zuordnungen "weiß" die Master-Steuereinheit 5, welche Signale (Digitalsignale DS und Analogsignale AS) auf dem Bussystem 4 wann und wohin weiterzuleiten sind. Wenn beispielsweise die für eine Reifendruckmessung zuständige Funktionseinheit 2.2 (TMP-IP) über ihr zugeordnetes Schnittstellenmodul 3.2 einen analogen Reifendruck-Messwert als analoges Signal AS auf dem analogen Bus 4.2 überträgt, weiß die Master-Steuereinheit 5, aufgrund der ROM-Tabelle 6, dass der entsprechende Messwert beispielsweise von der Funktionseinheit 2.4 benötigt wird. Entsprechend misst die Master-Steuereinheit 5 das auf dem analogen Bus 4.2 anstehende Analogsignal AS und gibt dieses zeitlich gesteuert ebenfalls auf dem analogen Bus 4.2 wieder aus, so dass es durch das Schnittstellen-Funktionsmodul 3.4 aufnehmbar und an die entsprechende Funktionseinheit 2.4 weiterleitbar ist. Nach Maßgabe der ROM-Tabelle 6 ist damit eine feste Zuordnung zwischen den über das Bussystem 4 verbundenen Ein- und Ausgängen der Schnittstellen-Funktionsmodule 3.1 - 3.5 bzw. den zugehörigen Funktionseinheiten 2.1 - 2.5 gegeben, was einer- über den Inhalt der ROM-Tabelle 6 (ROM-Code) anpassbaren und damit grundsätzlich anwendungsspezifischen- festen Verdrahtung entspricht.

Es sei in diesem Zusammenhang hier noch einmal betont, dass die erfindungsgemäße Schaltungsanordnung gemäß der Fig. 1 ohne Analog/Digital-Wandier bzw. Digital/Analog-Wandler in den Schnittstellen-Funktionsmodulen 3.1 - 3.5 auskommt, wohingegen derartige Wandlereinrichtungen bei herkömmlichen ICs in Ermangelung eines analogen Busses 4.2 regelmäßig vorhanden sind, was zu einem erhöhten Flächenbedarf für den IC 1 bzw. einem erhöhten Stromverbrauch führt.

Darüber hinaus steuert die erfindungsgemäß vorgesehene Master-Steuereinheit 5 die auf dem Bussystem 4 gesendeten Analog- und Digitalsignale AS, DS nach Maßgabe der ROM-Tabelle 6 in anwendungsspezifischer Weise und entlastet so den Mikroprozessor 9.

Alternativ zu der vorstehend beschriebenen, nach Maßgabe der in der ROM-Tabelle 6 enthaltenen Zuordnungen fest verdrahteten Ausführungsform der vorliegenden Erfindung ist es - wie erwähnt - prinzipiell auch möglich, die Master-Steuereinheit als softwaretechnische Einrichtung insbesondere der Datenverarbeitungseinheit 9 zu realisieren, wozu der IC 1 in den Speichereinheiten 10.1 und/oder 10.2 entsprechend ausgebildeten Programmcode enthalten kann.

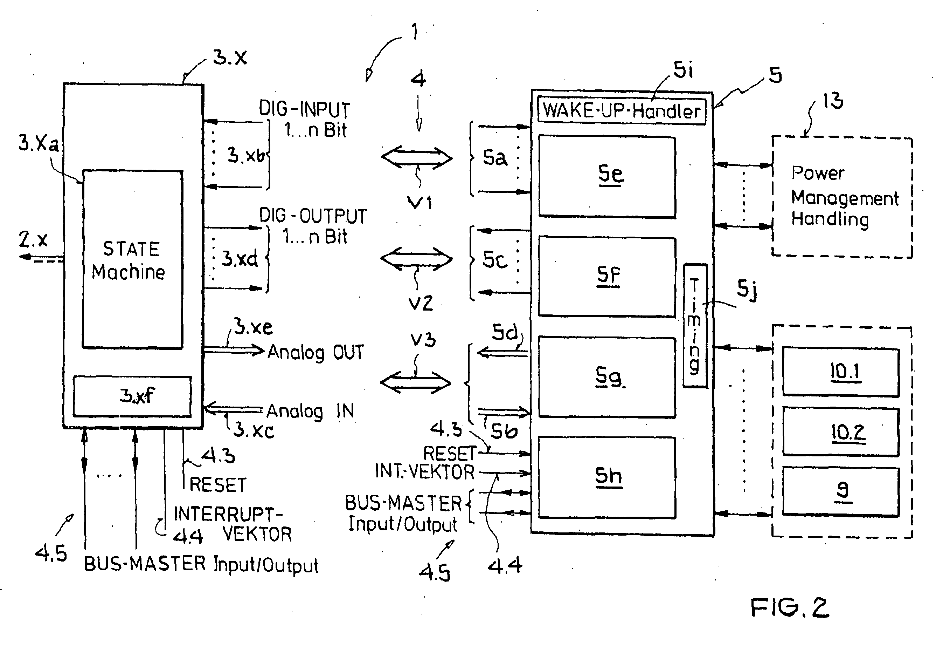

Durch das Vorsehen eines kombinierten analogen/digitalen Bussystems 4 in Verbindung mit einer zentralen Signal-Übertragungssteuerung durch die Master-Steuereinheit 5 schafft die vorliegende Erfindung - wie bereits erwähnt - einen vollständig modularen integrierten Schaltkreis 1, der-insbesondere nach Anpassung der Zuordnungen in der Master-Steuereinheit 5 - quasi beliebig einsetzbar ist, insbesondere für die weiter oben angesprochenen KFZ-Anwendungen. Die in diesem Zusammenhang vorstehend beschriebenen funktionellen Zusammenhänge werden nachfolgend unter Bezugnahme auf die Fig. 2 nochmals differenziert dargestellt.

Die Fig. 2 zeigt ein funktionelles Blockschaltbild der Master-Steuereinheit 5 (Fig. 1) als Bestandteil eines erfindungsgemäßen integrierten Schaltkreises 1 ("Standard-IC") (vgl. Fig. 1) in ihrem funktionellen Zusammenwirken mit einem standardisierten Schnittstellen-Funktionsmodul 3.X, vorzugsweise einem IP-Modul, wobei der Buchstabe "X" in Fig. 2 stellvertretend für die Ziffern "1" bis "5" gemäß der Darstellung in Fig. 1 steht.

Gemäß der weiter oben gegebenen Beschreibung der Fig. 1 fungiert jedes Schnittstellen-Funktionsmodul 3.X als Zustandsmaschine (State Machine) 3.Xa, wobei bestimmten Zuständen bzw. Zustandsübergängen an den digitalen Eingängen 3.Xb bzw. den analogen Eingängen 3.Xc eines Schnittstellen-Funktionsmoduls 3.X bestimmte Aktionen zugeordnet werden, die sich anhand von digitalen und analogen Ausgangssignalen an den entsprechenden Ausgängen 3.Xd bzw. 3.Xe und hinsichtlich einer Signalweiterleitung von der zugeordneten Funktionseinheit 2.X zum IC 1 bzw. von dem IC 1 zu dieser zurück widerspiegeln. Die vorstehend genannten Ein- und Ausgänge des Schnittstellen-Funktionsmoduls 3.X sind - wie weiter oben detailliert beschrieben - über den in der ROM-Tabelle 6 (Fig. 1) ROM-Code in "fest verdrahteter" Form über eine entsprechende Anzahl an Treibern mit bestimmten Bus-Eingängen 5a, 5b bzw. Bus-Ausgängen 5c, 5d des Standard-ICs 1 bzw. dessen Master-Steuereinheit 5 verknüpft, was in der Fig. 2 mittels Verknüpfungs-Doppelpfeilen V1 - V3 dargestellt ist.

Gemäß der weiter oben gegebenen Beschreibung der Fig. 1 fungiert erfindungsgemäß auch die Master-Steuereinheit 5 als Zustandsmaschine (State Machine) 5e bezüglich der Weiterleitung von Digital- und Analogsignalen DS bzw. AS über das Bussystem 4 (Fig. 1), d.h. über den digitalen Bus 4.1 bzw. den analogen Bus4.2. Dabei sind über die ROM-Tabelle 6 bestimmten Zuständen bzw. Zustandsänderungen an den Bus-Eingängen 5a, 5b bestimmte Aktionen, d.h. Signalausgaben an den Bus-Ausgängen 5c, 5d zugeordnet.

Entsprechend den weiteren bereits anhand der Fig. 1 beschriebenen Funktionen der Master-Steuereinheit 5 weist diese in ihrer funktionellen Darstellung gemäß der Fig. 2 weiterhin einen Scheduler 5f für den digitalen Bus 4.1 (Fig. 1), einen Scheduler 5.g für den analogen Bus 4.2 sowie einen geeigneten Protokoll-Handler 5h für das verwendete Signal-Übertragungsprotokoll auf, was dem Fachmann an sich geläufig ist. Darüber hinaus beinhaltet der erfindungsgemäße Standard-IC 1 noch einen Wake-Up Handler 5i, welcher eine Reaktion des Standard-IC 1 auf über das Bussystem 4 übertragene Wake-Up Signale definiert. Weiterhin weist der dargestellte Standard-IC 1 noch eine Timing-Einheit 5j zum zeitgenauen Steuern der vorstehend beschriebenen Abläufe auf. Schließlich sind in der Fig. 2 sowohl in Bezug auf das Schnittstellen-Funktionsmodul 3.X als auch in Bezug auf den Standard-IC 1 bzw. die Master-Steuereinheit 5 ein bei dem erfindungsgemäßen Bussystem 4 wie auch bei vorbekannten Bussystemen regelmäßig vorhandener Reset-Kanal 4.3, Interrupt-Vektor-Kanal 4.4 sowie Bus-Master-Input/Output-Kanäle 4.5 dargestellt, was dem Fachmann ebenfalls an sich bekannt ist.

In diesem Zusammenhang weist das Schnittstellen-Funktionsmodul 3.X noch eine Power-/Watch Dog-Steuereinheit 3.Xf auf, was dem Fachmann ebenfalls regelmäßig bekannt ist.

Die Stromversorgung für die beschriebene Schaltungsanordnung wird separat geführt und gesteuert, was in der Fig. 2 bei Bezugszeichen 13 ("Power Management Handling") symbolisch dargestellt ist.

Die besonderen Vorteile der vorliegenden Erfindung bestehen in einer kostengünstigeren Entwicklung von IC-Derivaten auf der Grundlage eines Standard-IC mit einem Bussystem für Analog- und Digitalsignale, gleichbleibendem Interface zwischen allen Schnittstellen-Funktionsmodulen sowie hoher Redundanz und Erweiterungsfähigkeit. Auf diese Weise lassen sich insbesondere EMV-/EMC-Einflüsse besser beherrschen. Dementsprechend zeichnet sich die vorliegende Erfindung durch eine hohe Betriebssicherheit und Diagnosemöglichkeiten im Test aus. Software-Updates, zum Beispiel durch so genanntes Flashen, werden dadurch wesentlich vereinfacht und können beispielsweise direkt über das (Air-)Interface 11 (vgl. Fig. 1) oder den LF-Kanal (Funktionseinheit 2.1, vgl. Fig. 1) vorgenommen werden. Da Software-Fehler und Updates in der Zukunft zahlenmäßig überproportional ansteigen werden, was zu entsprechend hohen Servicekosten führt, sowie aufgrund des Vorhandenseins unterschiedlichster Ländervarianten wird im Rahmen der vorliegenden Erfindung ein wesentlicher Schritt hin zu einem einheitlichen Standard gegangen, um auf diese Weise auch einem OEM ein Instrument an die Hand zu geben, in effizienter Weise Einzelkomponenten des Systems sowie auch die Software zu testen. Dies geschieht gemäß der Darstellung in Fig. 1 vorzugsweise über das (Air)-Interface 11 bzw. die Anschlusspins des IC 1 mittels einer geeigneten Testvorrichtung 12.

### Bezugszeichenliste

- 1: integrierter Schaltkreis (IC)
- 2.X: Funktionseinheit
- 3.X: Schnittstellen-Funktionsmodul
- 3.Xa: Steuerungseinheit
- 3.Xb: digitaler Eingang
- 3.Xc: analoger Eingang
- 3.Xd: digitaler Ausgang
- 3.Xe: analoger Ausgang
- 3.Xf: Power-/Watch-Dog-Steuereinheit
- 4: Bussystem
- 4.1: digitaler Bus
- 4.2: analoger Bus
- 4.3: Reset-Kanal
- 4.4: Interrupt-Vektor-Kanal
- 4.5: Bus-Master-Input/Output-Kanal
- 5: Master-Steuereinheit
- 5a: digitaler Bus-Eingang
- 5b: analoger Bus-Eingang
- 5c: digitaler Bus-Ausgang
- 5d: analoger Bus-Ausgang
- 5e: Zustandsmaschine (State Machine)
- 5f: Digitalbus-Scheduler
- 5g: Analogbus-Scheduler
- 5h: Protokoll-Handler
- 5i: Wake Up-Handler
- 5j: Timing-Einheit
- 6: ROM-Tabelle
- 7: Eingabevorrichtung
- 8: Datenträger
- 9: Datenverarbeitungseinheit
- 10.1: RAM-Speicher
- 10.2: EEPROM-/FLASH-Speicher
- 11: (Air)-Interface
- 12: Testvorrichtung
- 13: Power Management Handling
- AS: Analogsignal
- DS: Digitalsignal
- V1-3: Verknüpfung

## Patentansprüche

1. IC-internes Bussystem (4) zum signaltechnischen Verbinden einer Mehrzahl mit dem integrierten Schaltkreis (IC) (1) in Wirkverbindung stehender Funktionseinheiten (2.X), die zum Erzeugen und/oder Verarbeiten von digitalen (DS) und/oder analogen Signalen (AS) ausgebildet sind, wobei das Bussystem (4) einen digitalen Bus (4.1) aufweist,
**gekennzeichnet durch** einen zusätzlichen, IC-internen analogen Bus (4.2).

2. Bussystem (4) nach Anspruch 1, **gekennzeichnet durch** eine zentrale Master-Steuereinheit (5) für den digitalen Bus (4.1) und den analogen Bus (4.2), die zum zeitlich gesteuerten Weiterleiten von digitalen Signalen (DS) und analogen Signalen (AS) an die entsprechenden Funktionseinheiten (2.X) ausgebildet ist.

3. Bussystem (4) nach Anspruch 1 oder 2, **gekennzeichnet durch** eine Mehrzahl von Schnittstellen-Funktionsmodulen (3.X), die zum Anschließen jeweils wenigstens einer Funktionseinheit (2.X) an das Bussystem (4) ausgebildet sind.

4. Bussystem (4) nach Anspruch 3, **dadurch gekennzeichnet, dass** die Schnittstellen-Funktionsmodule (3.X) als IP-Module ausgebildet sind.

5. Bussystem (4) nach Anspruch 3 oder 4, **dadurch gekennzeichnet, dass** die Schnittstellen-Funktionsmodule (3.X) zum Weiterleiten von den jeweiligen Funktionseinheiten (2.X) empfangener digitaler Signale (DS) auf den digitalen Bus (4.1) und zum Weiterleiten von den jeweiligen Funktionseinheiten (2.X) empfangener analoger Signale (AS) auf den analogen Bus (4.2) ausgebildet sind.

6. Bussystem (4) nach einem der Ansprüche 2 bis 5, **dadurch gekennzeichnet, dass** die Master-Steuereinheit (5) mit wenigstens einer Speichereinheit (10.1, 10.2) und/oder Datenverarbeitungseinheit (9) in Verbindung steht.

7. Bussystem (4) nach einem der Ansprüche 2 bis 6, **dadurch gekennzeichnet, dass** die Master-Steuereinheit (5) als Zustandsmaschine (5e) ausgebildet ist.

8. Bussystem (4) nach einem der Ansprüche 2 bis 7, **dadurch gekennzeichnet, dass** die Master-Steuereinheit (5) für die Signalübertragung auf dem digitalen Bus (4.1) und dem analogen Bus (4.2) softwaretechnisch eingerichtet ist.

9. Bussystem (4) nach einem der Ansprüche 2 bis 8, **dadurch gekennzeichnet, dass** die Master-Steuereinheit (5) für die Signalübertragung auf dem digitalen Bus (4.1) und dem analogen Bus (4.2) nach Maßgabe vorgegebener Zuordnungen, insbesondere in Form von ROM-Tabellen (6), eingerichtet ist.

10. Bussystem (4) nach einem der vorangehenden Ansprüche, **gekennzeichnet durch** eine Schnittstelle (11) für den Anschluss einer zum Testen wenigstens einer der Funktionseinheiten (2.X), Schnittstellen-Funktionsmodule (3.X) oder Signalübertragungs-Konfiguration der Master-Steuereinheit (5) ausgebildeten Testvorrichtung (12).

11. Integrierter Schaltkreis (1) zum Anschließen einer Anzahl von Funktionseinheiten (2.X),
**gekennzeichnet durch**
• ein Bussystem (4) mit Merkmalen eines oder mehrerer der vorangehenden Ansprüche.

12. Schaltungsanordnung, aufweisend:
- einen integrierten Schaltkreis (1) nach Anspruch 11, und
- eine Anzahl an den integrierten Schaltkreis (1) angeschlossener Funktionseinheiten (2.X), die zum Erzeugen und/oder Verarbeiten von digitalen (DS) und/oder analogen Signalen (AS) ausgebildet sind.

## Claims

1. IC-internal bus system (4) for signal connection of a plurality of functional units (2.X) which are disposed in operative connection with the integrated circuit (IC) (1) and which are constructed for generating and/or processing digital signals (DS) and/or analog signals (AS), wherein the bus system (4) comprises a digital bus (4.1), **characterised by** an additional, IC-internal analog bus (4.2).

2. Bus system (4) according to claim 1, **characterised by** a central master control unit (5) for the digital bus (4.1) and the analog bus (4.2), which is constructed for passing on, controlled in terms of time, digital signals (DS) and analog signals (AS) to the corresponding functional units (2.X).

3. Bus system (4) according to claim 1 or 2, **characterised by** a plurality of interface functional modules (3.X) which are constructed for respective connecting of at least one functional unit (2.X) with the bus system (4).

4. Bus system (4) according to claim 3, **characterised in that** the interface functional modules (3.X) are constructed as IP modules.

5. Bus system (4) according to claim 3 or 4, **characterised in that** the interface functional modules (3.X) are constructed for passing on digital signals (DS), which are received from the respective functional units (2.X), to the digital bus (4.1) and for passing on analog signals (AS), which are received from the respective functional units (2.X), to the analog bus (4.2).

6. Bus system (4) according to one of claims 2 to 5, **characterised in that** the master control unit (5) is connected with at least one memory unit (10.1, 10.2) and/or data processing unit (9).

7. Bus system (4) according to one of claims 2 to 6, **characterised in that** the master control unit (5) is constructed as a status engine (5e).

8. Bus system (4) according to one of claims 2 to 7, **characterised in that** the master control unit (5) is equipped, in terms of software for signal transmission on the digital bus (4.1) and the analog bus (4.2).

9. Bus system (4) according to one of claims 2 to 8, **characterised in that** the master control unit (5) is equipped for signal transmission on the digital bus (4.1) and the analog bus (4.2) in accordance with predetermined associations, particularly in the form of ROM tables (6).

10. Bus system (4) according to one of the preceding claims, **characterised by** an interface (11) for connection of a test device (12) constructed for testing at least one of the functional units (2.X), interface function modules (3.X) or the signal transmission configuration of the master control unit (5).

11. Integrated circuit (1) for connecting a number of functional units (2.X), **characterised by** a bus system (4) with features of one or more of the preceding claims.

12. Circuit arrangement comprising:
- an integrated circuit (1) according to claim 11 and
- a number of functional units (2.X) which are connected with the integrated circuit (1) and which are constructed for generating and/or processing digital signals (DS) and/or analog signals (AS).

## Revendications

1. Système de bus à IC interne (4) pour la liaison technique de signal d'une pluralité d'unités fonctionnelles (2.X) en liaison active avec le circuit intégré (IC) (1) et conçues pour générer et/ou traiter des signaux numériques (DS) et/ou analogiques (AS), le système de bus (4) présentant un bus numérique (4.1), **caractérisé par** un bus supplémentaire à IC interne analogique (4.2).

2. Système de bus (4) selon la revendication 1, **caractérisé par** une unité centrale maître (5) pour le bus numérique (4.1) et le bus analogique (4.2), conçue pour le réacheminement commandé temporellement de signaux numériques (DS) et analogiques (AS) vers les unités fonctionnelles (2.X) correspondantes.

3. Système de bus (4) selon la revendication 1 ou 2, **caractérisé par** une pluralité de modules fonctionnels de jonction (3.X), conçus pour raccorder à chaque fois au moins une unité fonctionnelle (2.X) au système de bus (4).

4. Système de bus (4) selon la revendication 3, **caractérisé en ce que** les modules fonctionnels de jonction (3.X) sont réalisés sous la forme de modules IP.

5. Système de bus (4) selon la revendication 3 ou 4, **caractérisé en ce que** les modules fonctionnels de jonction (3.X) sont conçus pour le réacheminement de signaux numériques (DS) reçus par chacune des unités fonctionnelles (2.X) vers le bus numérique (4.1) et pour le réacheminement de signaux analogiques (AS) reçus par chacune des unités fonctionnelles (2.X) vers le bus analogique (4.2).

6. Système de bus (4) selon l'une quelconque des revendications 2 à 5, **caractérisé en ce que** l'unité maître (5) est reliée à au moins une unité mémoire (10.1, 10.2) et/ou une unité de traitement de données (9).

7. Système de bus (4) selon l'une quelconque des revendications 2 à 6, **caractérisé en ce que** l'unité maître (5) est conçue comme une machine d'états (5e).

8. Système de bus (4) selon l'une quelconque des revendications 2 à 7, **caractérisé en ce que** pour la transmission des signaux, l'unité maître (5) est installée sur le bus numérique (4.1) et le bus analogique (4.2) selon les techniques du programme.

9. Système de bus (4) selon l'une quelconque des revendications 2 à 7, **caractérisé en ce que** pour la transmission des signaux, l'unité maître (5) est installée sur le bus numérique (4.1) et le bus analogique (4.2) selon des affectations prédéfinies, plus particulièrement sous la forme de tables ROM (6).

10. Système de bus (4) selon l'une quelconque des revendications précédentes, **caractérisé par** une interface (11) pour le raccordement d'un dispositif de test (12) conçu pour tester au moins l'un ou l'une des unités fonctionnelles (2.X), des modules fonctionnels de jonction (3.X) ou de la configuration de transmission de signaux de l'unité maître (5).

11. Circuit intégré (1) pour le raccordement d'un certain nombre d'unités fonctionnelles (2.X), **caractérisé par** un système de bus (4) présentant des caractéristiques selon l'une ou plusieurs des revendications précédentes.

12. Circuit présentant :
. un circuit intégré (1) selon la revendication 11, et
. un certain nombre d'unités fonctionnelles (2.X) reliées au circuit intégré (1) conçues pour générer et/ou traiter des signaux numériques (DS) et/ou analogiques (AS).
